# EUROPEAN PATENT APPLICATION

(11) **EP 3 650 413 A1**
(43) Date of publication of application: **13.05.2020**
(21) Application number: 18853775.7
(22) Date of filing: 11.04.2018
(51) Int. Cl.: C03B 27/04

(54) **PLATE GLASS TEMPERING COOLING SYSTEM**

(30) Priority: 07.09.2017 CN 201710801835
(71) Applicant: Luoyang Landglass Technology Co., Ltd., Luoyang, Henan 471000 (CN)
(72) Inventor: ZHAO, Yan, Luoyang Henan 471000 (CN)
(74) Representative: Grünecker Patent- und Rechtsanwälte PartG mbB
(86) International application number: PCT/CN2018/082664
(87) International publication number: WO 2019/047521

(57) **Abstract**

A plate glass tempering cooling system includes an air collecting box, an air grid, and a conveying roller. An air inlet of the air collecting box is in communication with an air supply device, and the air collecting box and the air grid are connected through several ventilation tubes. The system further includes: a damper, disposed between the air collecting box and the air grid, and configured to open or close the ventilation tubes; a driving mechanism, configured to drive the damper to control closing and an opening range of the damper; an encoder, connected to the conveying roller, and configured to monitor information about a movement position of a plate glass on the conveying roller; and a control unit, electrically connected to the encoder and the driving mechanism respectively, and configured to receive position information of the plate glass that is fed back by the encoder, and send an instruction to the driving mechanism to control the closing and the opening range of the damper. By controlling the closing and the opening range of the damper, the system reduces stress patterns produced after tempering of the plate glass, and significantly improves finished product quality of tempered glass.

## Description

### BACKGROUND

### Technical Field

The present invention relates to the field of plate glass tempering processing technologies, and specifically, to a plate glass tempering cooling system.

### Related Art

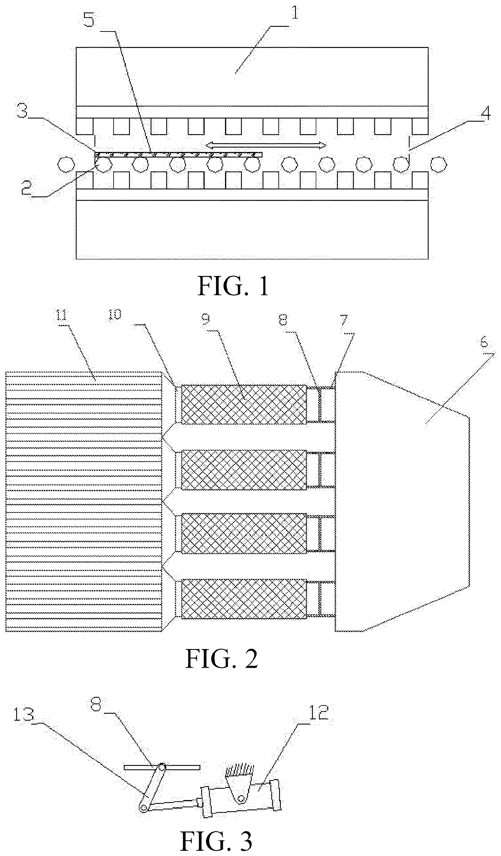

In the prior art, as shown in FIG. 1, in a process of plate glass tempering, a plate glass 5 heated to a softening temperature (600°C to 700°C) quickly leaves a furnace to enter a tempering cooling section 1, and in a process of reciprocating motion along a direction shown by an arrow on a conveying roller 2, the plate glass 5 is quickly cooled through high pressure air, to complete the tempering processing. When the plate glass 5 moves to a position near a left endpoint 3 or a right endpoint 4 of a moving path, the plate glass 5 starts to decelerate until it becomes static, and then moves towards an opposite direction. When the plate glass 5 is static, wind pressure produced when an air blower is working maintains unchanged, and the high pressure air is continuously sprayed on a fixed area of a surface of the plate glass 5. As a result, stress patterns are easily formed on the plate glass 5, seriously affecting finished product quality of tempered glass.

### SUMMARY

An objective of the present invention is to provide a plate glass tempering cooling system, to resolve the prior-art problem that stress patterns are quite easily formed on a plate glass during tempering of the plate glass.

To resolve the foregoing problem, the following technical solution is used in the present invention: a plate glass tempering cooling system, including an air collecting box, an air grid, and a conveying roller, where an air inlet of the air collecting box is in communication with an air supply device, the air collecting box and the air grid are connected through several ventilation tubes, and the system further includes:
a damper, disposed between the air collecting box and the air grid, and configured to open or close the ventilation tubes;
a driving mechanism, configured to drive the damper, to control closing and an opening range of the damper;
an encoder, connected to the conveying roller, and configured to monitor information about a movement position of a plate glass on the conveying roller; and
a control unit, electrically connected to the encoder and the driving mechanism respectively, and configured to receive position information of the plate glass that is fed back by the encoder, and send an instruction to the driving mechanism, to control the closing and the opening range of the damper.

Further, the several ventilation tubes are each provided with a damper.

Further, the ventilation tube includes an air-out pipe disposed on the air collecting box and corresponding to an air inlet of the air grid, and the damper is disposed in the air-out pipe.

Further, the damper is disposed at one end of the ventilation tube close to the air inlet of the air grid.

Further, the driving mechanism drives the damper to rotate to open or close the ventilation tube.

Further, the driving mechanism includes a swing arm and a driving device, and the swing arm has one end rotatably connected to the driving device and the other end fixedly connected to the damper.

Further, the driving mechanism includes a connecting rod, a swing arm, and a driving device, a plurality of swing arms are disposed along a length direction of the connecting rod, each swing arm has one end rotatably connected to the connecting rod and the other end fixedly connected to one damper, an end portion of the connecting rod is connected to the driving device, and the driving device drives the swing arm to swing through the connecting rod, to cause the damper to rotate.

Further, the driving mechanism is connected to the damper, to drive the damper to move along a direction perpendicular to an axis of the ventilation tube, to open or close the ventilation tube in which the damper is located.

Further, the ventilation tube is provided with a hose.

Further, the control unit is a programmable logic controller (PLC) or an industrial personal computer (IPC).

Further, the driving device is an air cylinder or a hydraulic cylinder.

A working process of the tempering cooling system of the present invention is as follows:
After entering the tempering cooling section, the plate glass reciprocates on the conveying roller to be quickly cooled to complete the tempering processing. A process in which the plate glass decelerates towards a direction near the left endpoint or the right point until it becomes static and then accelerates towards a direction away from the left endpoint or the right endpoint is referred to as a direction changing process of the plate glass. When the plate glass enters the process, the control unit receives position information of the plate glass that is fed back by the encoder, and sends an instruction to the driving mechanism, to close the damper to a first position through the driving mechanism. When the plate glass leaves the left endpoint or the right endpoint and completes the direction changing process, the control unit sends an instruction to the driving mechanism, to open the damper to a second position. An opening range of the damper at the first position is less than an opening range of the damper at the second position.

The opening range of the damper at the first position and the opening range of the damper at the second position may be set according to a thickness and a type of the plate glass, and the wind pressure during tempering cooling. For example, the opening range at the first position may be 0% (that is, the damper is fully closed), or may be 20%; the opening range at the second position may be 100% (that is, the damper is fully open), or may be 80%; and it should be ensured that the opening range of the damper at the first position is less than the opening range of the damper at the second position.

Compared with the prior art, the present invention has the following beneficial effects:
In the present invention, the damper that can open or close an air pipe is disposed in the ventilation tube connecting the air collecting box and the air grid, and after entering the tempering cooling section, the plate glass reciprocates on the conveying roller to be quickly cooled to complete the tempering processing. The process in which the plate glass decelerates towards the direction near the left endpoint or the right point until it becomes static and then accelerates towards the direction away from the left endpoint or the right endpoint is referred to as the direction changing process of the plate glass. When the plate glass enters the process, the control unit receives the position information of the plate glass that is fed back by the encoder, and sends an instruction to the driving mechanism, to close the damper to the first position through the driving mechanism, which effectively prevents stress patterns from being formed on the plate glass due to continuous spraying of the high pressure air on the fixed area of the surface of the plate glass when the plate glass is located at the left endpoint or at the right endpoint and is static, thereby significantly improving finished product quality of tempered glass.

### BRIEF DESCRIPTION OF THE DRAWINGS

FIG. 1 is a schematic diagram showing that a plate glass reciprocates in a tempering cooling section in the prior art;
FIG. 2 is a schematic structural diagram of the present invention;
FIG. 3 is a schematic structural diagram of a first implementation of a driving mechanism according to the present invention;
FIG. 4 is a schematic structural diagram of a second implementation of a driving mechanism according to the present invention; and
FIG. 5 is a schematic structural diagram of a third implementation of a driving mechanism according to the present invention.

Reference numerals: 1. Tempering cooling section, 2. Conveying roller, 3. Left endpoint, 4. Right endpoint, 5. Plate glass, 6. Air collecting box, 7. Air-out pipe, 8. Damper, 9. Air pipe, 10. Air inlet of air grid, 11. Air grid, 12. Driving device, 13. Swing arm, 14. Connecting rod.

### DETAILED DESCRIPTION

As shown in the figure, a plate glass tempering cooling system includes an air collecting box 6, an air grid 11, and a conveying roller. An air inlet of the air collecting box 6 is in communication with an air supply device, and the air collecting box 6 and the air grid 11 are connected through several ventilation tubes 9. A damper 8 is disposed between the air collecting box 6 and the air grid 11 and is configured to open or close the ventilation tube 9. The ventilation tube 9 includes an air-out pipe 7 disposed on the air collecting box 6 and corresponding to an air inlet of the air grid, the damper 8 is disposed in the air-out pipe 7, and each air-out pipe 7 is provided with a damper 8. The damper 8 may alternatively be disposed at one end of the ventilation tube 9 close to the air inlet 10 of the air grid. The damper 8 is driven by a driving mechanism, to control closing and an opening range of the damper 8. The tempering cooling system further includes an encoder and a control unit. The encoder is connected to a conveying roller 2, and configured to monitor information about a movement position of a plate glass 5 on the conveying roller 2. The control unit is electrically connected to the encoder and the driving mechanism respectively, and configured to receive position information of the plate glass 5 that is fed back by the encoder, and send an instruction to the driving mechanism to control the closing and the opening range of the damper 8.

The driving mechanism controls the damper 8 in two manners. In a first manner, the driving mechanism drives the damper 8 to rotate to open or close the ventilation tube 9. In a second manner, the driving mechanism drives the damper 8 to move along a direction perpendicular to an axis of the ventilation tube 9, to open or close the ventilation tube 9 in which the damper 8 is located.

In the first manner, two specific control manners are further included: the dampers 8 work independently or the dampers 8 work synchronously.

As shown in FIG. 3, when the dampers 8 work independently, each damper 8 corresponds to one set of driving mechanism. The driving mechanism includes a driving device 12 and a swing arm 13, the driving device 12 may be an air cylinder or a hydraulic cylinder, and the swing arm 13 has one end hingedly connected to the driving device 12 and the other end fixedly connected to the damper 8. Preferably, the damper 8 is fixedly connected to a rotation shaft, an end portion of the rotation shaft passes through a tube wall in which the rotation shaft is located and is fixedly connected to the swing arm 13, and the driving device 12 drives the swing arm 13 and the damper 8 to rotate around a specified axis, thereby opening or closing the ventilation tube 9 in which the damper 8 is located, wherein the axis is located at a position where the end of the swing arm 13 and the driving device are hingedly connected.

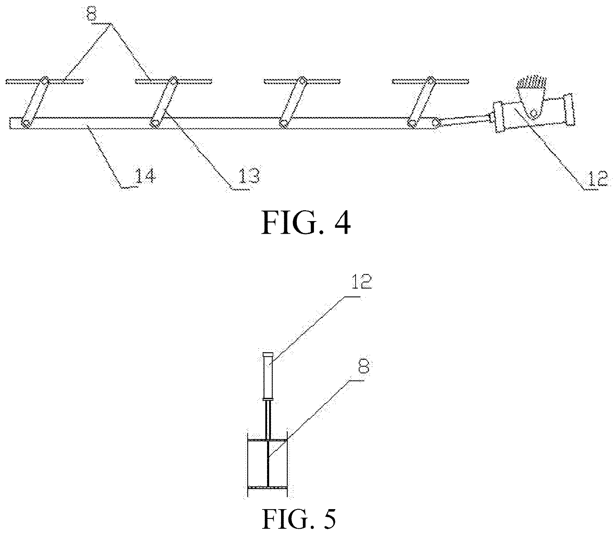

As shown in FIG. 4, when at least two dampers 8 work synchronously, the driving mechanism includes a driving device 12, a swing arm 13, and a connecting rod 14, the driving device 12 may be an air cylinder or a hydraulic cylinder, the swing arm 13 has one end fixedly connected to the damper 8 and the other end hingedly connected to the connecting rod 14, and an end portion of the connecting rod 14 is connected to the driving device 12. Preferably, the damper 8 is fixedly connected to a rotation shaft, and an end portion of the rotation shaft passes through a tube wall in which the rotation shaft is located and is fixedly connected to the swing arm 13. During operation, the driving device 12 works to drive the connecting rod 14 to move, to drive the swing arm 13 and the damper 8 to rotate around a specified axis, thereby opening or closing the ventilation tube 9 in which the damper 8 is located, where the axis is located at a position where the swing arm 13 and the connecting rod 14 are hingedly connected.

For the second manner, as shown in FIG. 5, the driving mechanism uses an air cylinder, a hydraulic cylinder, or other mechanisms that can achieve linear reciprocating motion as the driving device 12. The driving device 12 is directly connected to the damper 8, opens or closes the ventilation tube 9 by driving the damper 8 to linearly move, and controls the opening range.

A working process of the tempering cooling system of the present invention is as follows:
After entering the tempering cooling section 1, the plate glass 5 reciprocates on the conveying roller 2 to be quickly cooled to complete the tempering processing. A process in which the plate glass 5 decelerates towards a direction near the left endpoint 3 or the right point 4 until it becomes static and then accelerates towards a direction away from the left endpoint 3 or the right endpoint 4 is referred to as a direction changing process of the plate glass 5. When the plate glass 5 enters the process, the control unit receives position information of the plate glass 5 that is fed back by the encoder, and sends an instruction to the driving mechanism, to close the damper 8 to a first position through the driving mechanism. When the plate glass 5 leaves the left endpoint 3 or the right endpoint 4 and completes the direction changing process, the control unit sends an instruction to the driving mechanism, to open the damper 8 to a second position. An opening range of the damper 8 at the first position is less than an opening range of the damper 8 at the second position.

The opening range of the damper 8 at the first position and the opening range of the damper 8 at the second position may be set according to a thickness and a type of the plate glass 5, and the wind pressure during tempering cooling. For example, the opening range at the first position may be 0% (that is, the damper 8 is fully closed), or may be 20%; the opening range at the second position may be 100% (that is, the damper 8 is fully open), or may be 80%; and it should be ensured that the opening range of the damper 8 at the first position is less than the opening range of the damper 8 at the second position.

## Claims

1. A plate glass tempering cooling system, comprising an air collecting box (6), an air grid (11), and a conveying roller, an air inlet of the air collecting box (6) being in communication with an air supply device, the air collecting box (6) and the air grid (11) being connected through several ventilation tubes (9), and the system further comprising:
a damper (8), disposed between the air collecting box (6) and the air grid (11), and configured to open or close the ventilation tubes (9);
a driving mechanism, configured to drive the damper (8), to control closing and an opening range of the damper (8);
an encoder, connected to the conveying roller (2), and configured to monitor information about a movement position of a plate glass on the conveying roller (2); and
a control unit, electrically connected to the encoder and the driving mechanism respectively, and configured to receive position information of the plate glass that is fed back by the encoder, and send an instruction to the driving mechanism, to control the closing and the opening range of the damper (8).

2. The plate glass tempering cooling system according to claim 1, wherein the several ventilation tubes (9) are each provided with a damper (8).

3. The plate glass tempering cooling system according to claim 1 or 2, wherein the ventilation tube (9) comprises an air-out pipe (7) disposed on the air collecting box (6) and corresponding to the air inlet (10) of the air grid, and the damper (8) is disposed in the air-out pipe (7).

4. The plate glass tempering cooling system according to claim 2, wherein the damper (8) is disposed at one end of the ventilation tube (9) close to the air inlet (10) of the air grid.

5. The plate glass tempering cooling system according to claim 1 or 2, wherein the driving mechanism drives the damper (8) to rotate to open or close the ventilation tube.

6. The plate glass tempering cooling system according to claim 4, wherein the driving mechanism comprises a driving device (12) and a swing arm (13), and the swing arm (13) has one end hingedly connected to the driving device (12) and the other end fixedly connected to the damper (8).

7. The plate glass tempering cooling system according to claim 4, wherein the driving mechanism comprises a driving device (12), a swing arm (13), and a connecting rod (14), a plurality of swing arms (13) are disposed along a length direction of the connecting rod (14), each swing arm (13) has one end hingedly connected to the connecting rod (14) and the other end fixedly connected to one damper (8), an end portion of the connecting rod (14) is connected to the driving device (12), and the driving device (12) drives the swing arm (13) to swing through the connecting rod (14), to cause the damper (8) to rotate.

8. The plate glass tempering cooling system according to claim 1 or 2, wherein the driving mechanism is connected to the damper (8), to drive the damper (8) to move along a direction perpendicular to an axis of the ventilation tube (9), to open or close the ventilation tube (9) in which the damper (8) is located.

9. The plate glass tempering cooling system according to claim 1, wherein the ventilation tube (9) is provided with a hose.

10. The plate glass tempering cooling system according to claim 1, wherein the control unit is a programmable logic controller (PLC) or an industrial personal computer (IPC).

11. The plate glass tempering cooling system according to claim 6 or 7, wherein the driving device (12) is an air cylinder or a hydraulic cylinder.
